# EUROPEAN PATENT SPECIFICATION

(11) **EP 1 036 950 B1**
(45) Date of publication and mention of the grant of the patent: **17.09.2003**
(21) Application number: 00200928.0
(22) Date of filing: 14.03.2000
(51) Int. Cl.: F16B 37/04, F16L 3/24

(54) **Mounting system**
Befestigungssystem
Système de fixation

(30) Priority: 15.03.1999 NL 1011556
(43) Date of publication of application: 20.09.2000
(73) Proprietor: FLAMCO B.V., NL-2802 AC Gouda (NL)
(72) Inventor: Kemper, Dimitri Wasil, 1106 BR Amsterdam (NL)
(74) Representative: Griebling, Onno

(56) References cited:
- EP-A- 0 671 581
- DE-U- 29 621 873
- FR-A- 2 636 687
- US-A- 5 375 798

## Description

The invention relates to an mounting system according to the preamble of claim 1.

An mounting system of this nature is known from the German Offenlegungsschrift DE-197 05 709 A1.

In the known mounting system, the mounting element comprises an intermediate part which is resiliently connected to the support part, the spring element between the support part and the intermediate part acting as a tension spring and, in the state in which the support part is coupled to the profiled section, pulling the support part onto the inside of the flanged edges of the profiled section and, in this way, clamping together the mounting element and the profiled section in such a manner that, as a result of a slight force being exerted, the mounting element can still be displaced inside the profiled section. In order for it to be possible to transmit the tensile force of the spring to the support part, the spring element which is fixedly connected to the intermediate part is also fixedly connected to the support part. This is achieved by the fact that spring arms which form the spring element are welded securely to that side of the support part which faces towards the intermediate part. This requires an additional operation in the production process for the mounting element. In the state before the mounting element is coupled to the profiled section, the support part and the intermediate part will be drawn together by the tensile force which is exerted by the spring element. Consequently, when the mounting element is to be coupled to the profiled section, the support part and the intermediate part of the mounting element have to be moved away from one another counter to the spring force in order to make the distance between the support part and the intermediate part at least sufficiently great for it to be possible to span the height of the flanged edges of the profiled section. This means that a fitter has to exert a relatively great force in order for it to be possible to couple the mounting element to the profiled section.

The object of the present invention is to provide an mounting system which overcomes the abovementioned drawbacks.

According to the present invention, this object is achieved with an mounting system of the type described in the preamble, by the fact that the support part, on the one hand, and the intermediate part with the spring element, on the other hand, are separate components and the spring element bears against the support part and exerts a force thereon which tends to press the support part and the intermediate part apart.

Preferred embodiments of the mounting system according to the invention are given in the subclaims.

The invention will be explained in more detail in the following description of an exemplary embodiment and with reference to the drawing, in which:
- Fig. 1: shows a perspective view of the various components of an mounting system according to the invention,
- Fig. 2: shows a perspective view of the support part, the intermediate part and the clamping part of the mounting element of the mounting system shown in Fig. 1,
- Fig. 3: shows the mounting system from Fig. 1 during the assembly of the mounting element 2,
- Fig. 4: shows the mounting system from Fig. 1 with the mounting element in the coupled state.

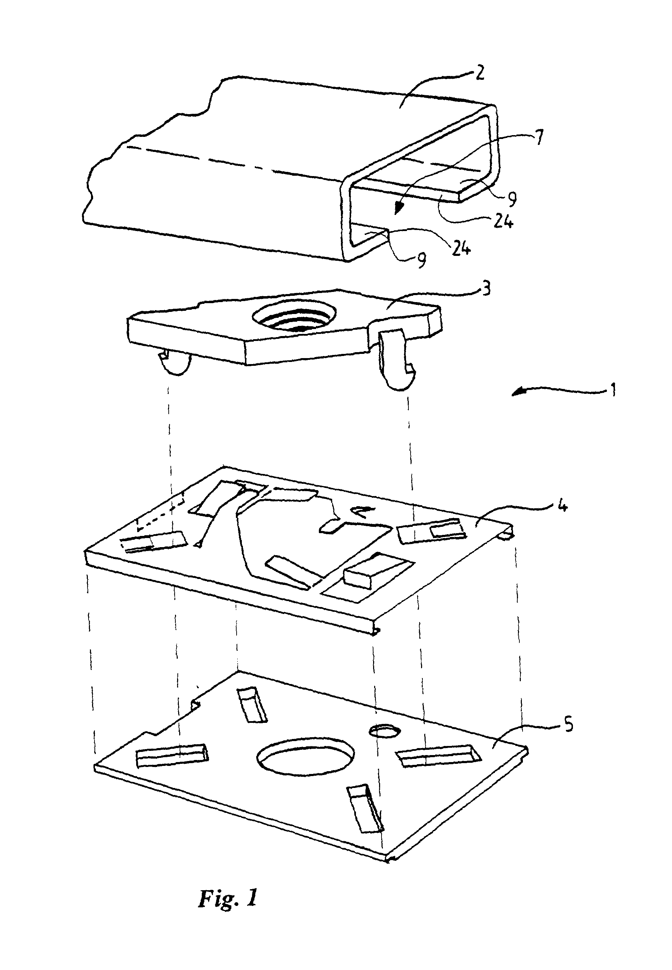

The mounting system 1 shows in Figures 1, 3 and 4 comprises a profiled section 2, a support part 3, an intermediate part 4 and a clamping part 5. The support part 3, the intermediate part 4 and the clamping part 5 together form an mounting element 6. The support part 3 of the mounting element 6 can be introduced into the interior of the profiled section 2 via an assembly opening 7 in the profiled section 2 and inside the profiled section can be rotated in such a manner that the free, flat support surfaces 8 of the support part 3 rest against the inside of inwardly bent flanged edges 9 of the profiled section 2.

The support part 3 is diamond-shaped and comprises two long sides 10. The intermediate part 4 is moveably connected to the support part 3, to which end the support part 3 comprises two connecting pins 11 which are able to interact with connecting openings 12 formed in the intermediate part 4. The connecting pins 11 are bent out from two notches 13 arranged diametrically opposite one another in the support part 3 and face towards the intermediate part 4.

At their free ends, the connecting pins 11 are each provided with an outwardly bent hook-shaped end part 14 which comprises a stop surface 15 on that side of the end part 14 which is directed towards the support part 3. The connecting openings 12 which, together with the connecting pins 11, connect the support part 3 to the intermediate part 4, are arranged diametrically opposite one another in the rectangular, elongate intermediate part 4.

As shown in Figures 1-4, the intermediate part 4 is designed as a flat plate.

The connecting openings 12 each comprise a locking lip 16 which has been formed out of the intermediate part material. The connection between the support part 3 and the intermediate part 4 is now brought about as a result of the hook-shaped end parts 14 being pressed through the corresponding connection openings 12, so that the support surface 15 comes to bear against that side of the corresponding locking lip 16 which is directed away from the support part 3 when the support part 3 and the intermediate part 4 are moved away from one another.

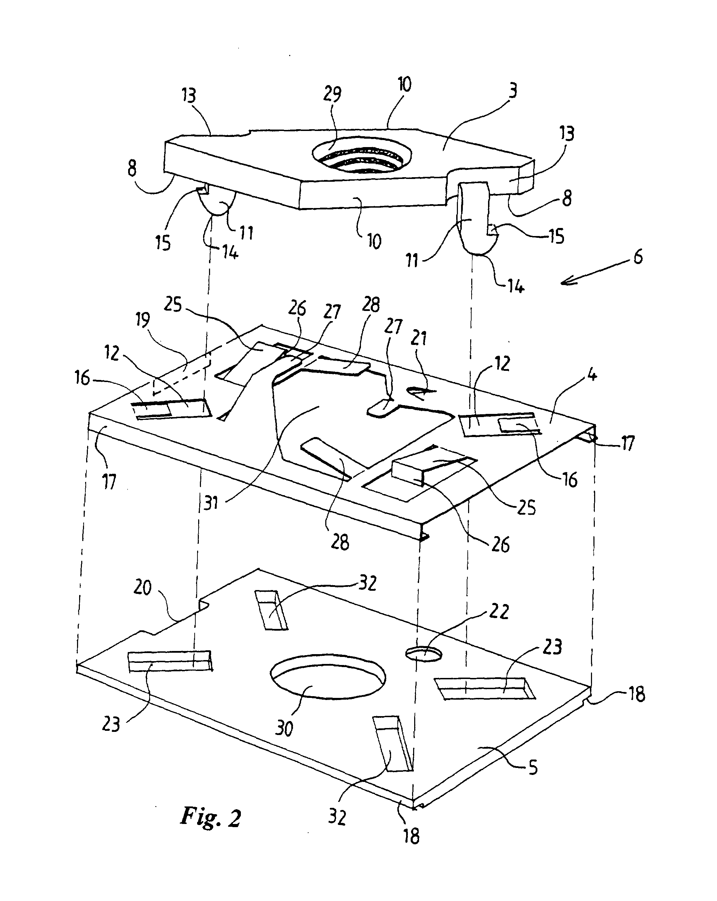

As shown in Figure 2, the mounting element 6 comprises a clamping part 5. The clamping part 5, in the assembled state of the connecting element 6, is connected to the intermediate part 4. For this purpose, the intermediate part 4 comprises, on its side directed away from the support part 3, two longitudinal edges 17 which are parallel to one another, are bent over towards the clamping part 5 and engage around the corresponding longitudinal edges 18 of the clamping part 5. In the peripheral direction, the clamping part 5 is shaped identically to the intermediate part 4. The connection between the clamping part 5 and the intermediate part 4 is brought about as a result of the clamping part 5 being pushed between the bent-over longitudinal edges 17 of the intermediate part 4 into the intermediate part 4 until the longitudinal edges 18 of the clamping part 5 are completely enclosed by the bent-over longitudinal edges 17 of the intermediate part 4. In order to prevent the clamping part 5 from being pushed too far into the intermediate part 4, a block in the form of a lip 19 which is bent over towards the clamping part 5 is arranged on one of the end sides of the intermediate part 4. Consequently, the clamping part 5 can only be pushed into the intermediate part 4 via the other end side of the intermediate part 4. To ensure that the clamping part 5, which has corresponding dimensions to those of the intermediate part 4, is correctly connected to the intermediate part 4, on that end side of the clamping part 5 which corresponds to that end side of the intermediate part 4 on which the bent-over lip 19 is arranged, there is a notch 20 which accommodates the bent-over lip 19 when the clamping part 5 has been pushed fully into the intermediate part 4.

In the coupled state of the clamping part 5 and the intermediate part 4, it is possible to prevent the clamping part 5 from being uncoupled from the intermediate part 4 by providing the intermediate part 4, on one of its long sides, with a locking lip 21 which is directed towards the clamping part 5. For this purpose, the clamping part 5 is provided with a locking opening 22 which, in the coupled state of the clamping part 5 and the intermediate part 4, receives the locking lip 21 which is directed towards the clamping part 5 and thus prevents the clamping part 5 from being pushed back out of the intermediate part 4.

When the clamping part 5 and the intermediate part 4 are coupled to one another, that side of the clamping part 5 which is directed towards the intermediate part 4 and that side of the intermediate part 4 which is directed towards the clamping part 5 will bear against one another. When, as described above, in the assembled state of the mounting element 6 the support part 3 is connected to the intermediate part 4 by means of its connecting pins 11, the hook-shaped end parts 14 of the connecting pins 11 will project on that side of the intermediate part 4 which is directed towards the clamping part 5. However, since this side bears against the corresponding side of the clamping part 5, the clamping part 5 is provided with receiving openings 23 which receive the hook-shaped end parts 14 in a suitable manner and for this purpose, in a corresponding manner to the connecting openings 12 formed on the intermediate part 4, are arranged diametrically opposite one another in the clamping part 5. The intermediate part 4 and the clamping part 5 then form a flat, dimensionally stable assembly part.

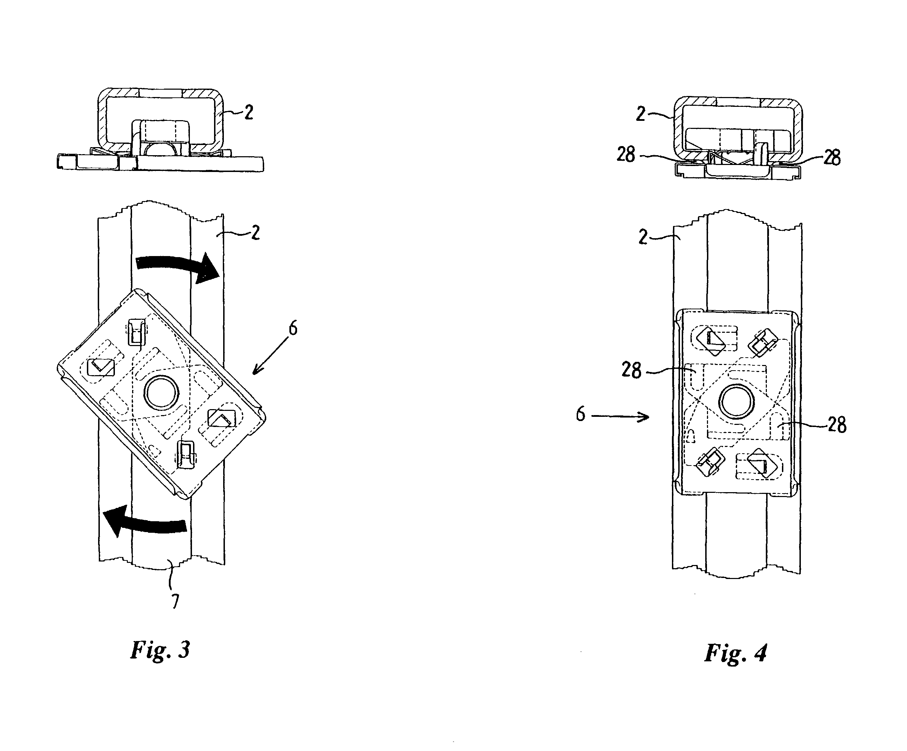

The assembled mounting element 6 is connected to the profiled section 2 in order, in this way, to assemble the mounting system 1, as shown in Figures 1, 3 and 4, for attaching tubes or similar objects to a wall or ceiling or the like. For this purpose, the support part 3 of the mounting element 6 is introduced into the interior of the profiled section 2 via the assembly opening 7, which is delimited by the parallel flanged edges 9 of the profiled section 2. In order for it to be possible to introduce the support part 3 into the interior of the profiled section 2, the width of the support part 3 is less than the width of the assembly opening 7 in the profiled section 2. The support part 3 and consequently the entire mounting element 6 can be rotated, so that the support part 3 can rotate inside the profiled section 2. This situation is illustrated in Figure 3, in which the support part 3 has just been introduced into the interior of the profiled section 2 via the assembly opening 7. The mounting element 6 can be rotated sufficiently far for the connecting pins 11 which project outside the interior of the profiled section 2 to bear against the corresponding edges 24 of the bent flanged edges 9. The connecting pins 11 thus also act as a stop which prevents the possibility of the support part 3 and consequently the mounting element 6 being rotated too far. The state in which the connecting pins 11 bear against the edges 24 of the profiled section 2 is illustrated in Figure 4. The dimensions of the end sides of the intermediate part 4 and the clamping part 5 which is coupled thereto, i.e. those dimensions of the sides of the intermediate part 4 and the clamping part 5 which, in the rotated state as shown in Figure 4, are at right angles to the longitudinal direction of the profiled section 2, are selected in such a manner that the intermediate part 4 and the clamping part 5 coupled thereto span the assembly opening 7.

The rotated state of the mounting element 6, as shown in Figure 4, is the state in which the mounting system 1 is substantially ready for further use. However, it is a disadvantage for use of the mounting system 1 if the mounting element 6 can rotate back to the state shown in Figure 3. Therefore, the mounting element 6 is preferably provided with a block which prevents the mounting element 6 from rotating back out of the profiled section 2, in which case, as shown in Figure 2, a block of this nature may, for example, be arranged on the intermediate part 4 in the form of two resilient lips 25. The resilient lips 25 are designed as elongate lips which are bent out of the intermediate part 4, towards the support part 3, face away from one another, are parallel to one another and are also at right angles to the longitudinal edges 17 of the intermediate part 4. At their free end, the resilient lips 25 each comprise a lip end part 26 which is directed away from the support part 3 and forms a substantially vertical stop surface. When the mounting element 6 is in the rotated state, as shown in Figure 4, the resilient lips 25 will be located entirely between the edges 24 of the bent flanged edges 9 and the lip end parts 26 will bear precisely against the corresponding edges 24. In this way, the resilient lips 25 are enclosed between the edges 24 of the flanged edges 9, thus preventing the support part 3 and consequently the mounting element 6 from rotating back out of the profiled section 2.

To make it easier to introduce the support part 3 into the interior of the profiled section 2 and to rotate the support part 3 therein, in particular to make it easier for the height of the bent flanged edges 9 to be spanned by the rotating support part 3, the support part 3, which is connected to the intermediate part 4, is held at a distance from the intermediate part 4 by means of a spring element, this distance, measured between that side of the support part 3 which is directed towards the intermediate part 4 and that side of the intermediate part 4 which is directed towards the support part 3, being at least equal to the height of the flanged edges 9 which is to be spanned. In a preferred embodiment of the mounting element, the spring element is composed of two resilient lips 27 which are bent out of the intermediate part 4 towards the support part 3 and bear, by way of their free ends, against that side of the support part 3 which is directed towards the intermediate part 4. In the process, the resilient lips 27 exert a force on the support part 3, which force tends to press the support part 3 and the intermediate part 4, which are connected to one another by means of the connecting pins 11, apart. The spring element thus functions as a compression spring which holds the support part 3 and the intermediate part 4, with the clamping plate 5 coupled thereto, at a distance from one another. This considerably simplifies the rotation of the support part 3 in the interior of the profiled section 2, since the support part 3 does not have to be "lifted" over an edge which is formed by the height of the flanged edges 9, as is the case in the mounting system described in DE 195 05 709 A1.

The design of the spring element is not limited to the above design, but rather may also comprise a single resilient lip or spring arm which, for example, is of semicircular design.

The mounting element 6 which is coupled to the profiled section 2 as shown in Figure 4 will be able, in the event of the profiled section 2 being fitted in a non-horizontal position, for example on a wall, to move unimpeded along the profiled section 2. To make this more difficult, the mounting element 6 is preferably provided with a resistance element which interacts with those sides of the flanged edges 9 which are directed towards the intermediate part 4. This resistance element prevents undesirable movement of the mounting element 6.

In a preferred embodiment of the present invention, the resistance element is designed in the form of two resilient, elongate lips 28 which are bent out of the intermediate part 4 towards the support part 3 and are preferably parallel to the longitudinal edges 17 of the intermediate part 4. As shown in Figure 4, in the coupled state of the mounting element 6 to the profiled section 2, the free end of each of the resilient lips 28 will bear against the corresponding side, directed towards the intermediate part 4, of the flanged edges 9 and, in so doing, exert a force on the flanged edges 9.

For the use of a threaded rod, threaded bolt or the like, the support part 3 is provided with a drilled hole 29 with a screw thread, and the clamping part 5 is provided with a corresponding passage hole 30. For a threaded rod, threaded bolt or the like to be suitably passed through the intermediate part 4, the resilient lips 27, 28 are arranged in such a manner on the intermediate part 4 4 that they leave clear a passage opening 31.

When the mounting element 6 has been moved to the desired position in the profiled section 2, for further use this element 6 has to be clamped securely to the profiled section 2. In this context, securely clamped means that the mounting element 6 clamps sufficiently securely around the flanged edges 9 of the profiled section 2 for it to become impossible for the mounting element 6 to be displaced further along the profiled section 2. The required clamping between the mounting element 6 and the flanged edges 9 of the profiled section 2 is brought about by clamping the flanged edges 9 between the support surfaces 8 of the support part 3 and the flat longitudinal edges of that side of the intermediate part 4 which is directed towards the support part 3. To achieve this, the support part 3 and the intermediate part 4 with the clamping part 5 coupled securely to it have to be moved towards one another. This may, for example, be brought about by attaching a nut or the like to a threaded rod which interacts with the support part 3 and projects through the clamping part 5, on that side of the clamping part 5 which is directed away from the support part 3, and by tightening this nut or the like so that it moves along the threaded rod towards the support part 3 and thus moves the clamping part 5 with it towards the support part 3. In this way, the support part 3 and the intermediate part 4 with the clamping part 5 coupled thereto are moved towards one another and the spring element, with the two resilient lips 27, is pressed inwards on the intermediate part 4.

In addition to the resilient lips 27, during the above-described clamping, the resilient lips 25, 28 are also pressed towards the clamping part 5. However, the resilient lips 25 comprise a vertical bent-over lip end part 26 which will project on that side of the intermediate part 4 4 which is directed towards the clamping part 5. The clamping part 5 is therefore provided with receiving openings 32 which are arranged diametrically opposite one another and, in the state in which the mounting element 6 is fixedly connected to the profiled section 2, are able to receive the lip end parts 26.

A variant of the mounting element 6 is created by designing the support part 3 as a T-head bolt. In this case, the threaded section of the bolt projects through the clamping part 5. A nut or a similar attachment means can be attached to this threaded section.

In a preferred embodiment of the mounting element, the intermediate part 4 is produced from a thin, sheet-like piece of metal with spring-elastic properties. It is also conceivable for the intermediate part 4 to be made from a plastic with similar properties.

In a preferred embodiment of the mounting element, the clamping part 5 is made from a suitable metal or some other type of material; the material must be able to withstand the clamping forces which are generated while the attachment means 6 is being clamped securely to the profiled section 2.

## Claims

1. Mounting system comprising a profiled section (2) which is substantially C-shaped in cross section and has an assembly opening (7), which runs in the longitudinal direction of the profiled section (2) and is delimited by mutually parallel, inwardly bent flanged edges (9) of the profiled section (2), and a mounting element (6) which is able to interact with the profiled section (2) and comprises a slightly elongate plate-like support part (3), in which there is a drilled hole (29) which is provided with a screw thread for receiving a threaded bolt, threaded rod or the like, which support part (3), for the purpose of coupling the mounting element (6) to the profiled section (2), can be introduced via the assembly opening (7) into the interior of the profiled section (2) and then can be rotated, in such a manner that the support part (3), in the rotated position, spans the width of the assembly opening (7), and a plate-like intermediate part (4) which is connected to the support part (3) and runs substantially parallel to the support part (3), the distance between the intermediate part (4) and the support part (3) being variable within defined limits, and the intermediate part (4) and the support part (3) being substantially unable to rotate with respect to one another, which intermediate part (4) is provided with a passage opening (31), lying opposite the drilled hole (29) in the support part (3), for a threaded bolt, threaded rod or the like and has dimensions which are such that, in the state in which the mounting element (6) is coupled to the profiled section (2), the intermediate part (4) is able to span the assembly opening (7) in the profiled section (2) on the outside of the profiled section (2), the intermediate part (4) being provided, on the side directed towards the support part (3), with a spring element which acts between the intermediate part (4) and the support part (3), **characterized in that** the support part (3), on the one hand, and the intermediate part (4) with the spring element, on the other hand, are separate components and the spring element bears against the support part (3) and exerts a force thereon which tends to press the support part (3) and the intermediate part (4) apart.

2. Mounting system according to claim 1, **characterized in that** the spring element and the intermediate part (4) form a single unit and the spring element is bent out of the plane of the intermediate part (4) towards the support part (3).

3. Mounting system according to claim 2, **characterized in that** spring element comprises at least one resilient lip (27) which at its free end bears against the support part (3).

4. Mounting system according to claim 3, **characterized in that** the spring element comprises a plurality of, preferably two, resilient lips (27) which are positioned next to the area of the passage opening (7).

5. Mounting system according to one of claims 1-4, **characterized in that** the intermediate part (4) is provided, on the side facing towards the support part (3), with a resistance element which, in the state in which the mounting element (6) is coupled to the profiled section (2), interacts with at least one inwardly bent flanged edge (9) of the profiled section (2) in order to make it difficult for the mounting element (6) to shift with respect to the profiled section (2).

6. Mounting system according to claim 5, **characterized in that** the resistance element and the intermediate part (4) form a single unit and the resistance element is bent out of the plane of the intermediate part (4) towards the support part (3).

7. Mounting means according to claims 5 or 6, **characterized in that** the resistance element comprises at least one resilient lip (28) which, in the state in which the mounting means (6) is coupled to the profiled section (2), at its free end bears against the outside of at least one of the inwardly bent flanged edges (9) of the profiled section (2) and exerts a force thereon which tends to press the flanged edge (9) and the intermediate part (4) apart.

8. Mounting system according to one of claims 5-7, **characterized in that** the resistance element comprises a plurality of, preferably two, resilient lips (28) which are each able to interact with an inwardly bent flanged edge (9) of the profiled section (2).

9. Mounting system according to claim 1, **characterized in that** the intermediate part (4) is provided with a stop which, in the state in which the mounting element (6) is coupled to the profiled section (2), prevents the possibility of the intermediate part (4) and therefore the support part (3) being rotated back.

10. Mounting system according to claim 9, **characterized in that** the stop forms a single unit with the intermediate part (4) and is bent out of the plane of the intermediate part (4) towards the support part (3).

11. Mounting system according to claim 10, **characterized in that** the stop is designed as a resilient lip (25).

12. Mounting system according to claim 11, **characterized in that** the resilient lip (25) is provided at its free end with a lip end part (26) which is directed away from the support part (3) and, in the state in which the mounting element (6) is coupled to the profiled section (2), bears against that side of an inwardly bent flanged edge (9) which is directed towards the assembly opening (7).

13. Mounting system according to one of claims 9-12, **characterized in that** the intermediate part (4) comprises a plurality of, preferably two, stops.

14. Mounting means according to claim 1, **characterized in that** the support part (3) is provided with a plurality of, preferably two, connecting pins (11) which connect the support part (3) and the intermediate part (4) to one another, it being possible for the distance between the support part (3) and the intermediate part (4) to vary within defined limits, but the support part (3) and the intermediate part (4) being substantially unable to rotate with respect to one another.

15. Mounting system according to claim 14, **characterized in that** the connecting pins (11) and the support part (3) form a single unit and the connecting pins (11) are each directed towards the intermediate part (4).

16. Mounting system according to claim 14 or 15, **characterized in that** the connecting pins (11) are provided, at their free end, with a hook-shaped end (14) which engages behind the intermediate part (4).

17. Mounting system according to one of claims 14-16, **characterized in that** the intermediate part (4) is provided with a plurality of, preferably two connecting openings (12).

18. Mounting system according to claim 17, **characterized in that** the connecting openings (12) each comprise a resilient lip (16) which is able to interact with the hook-shaped end (14) of a connecting pin (11) of the support part (3).

19. Mounting system according to claim 18, **characterized in that** the resilient lips (16) form a single unit with the intermediate part (4).

20. Mounting system according to claim 19, **characterized in that**, in the state in which the support part (3) and the intermediate part (4) are connected to one another, the hook-shaped end (14) of each connecting pin (11) engages behind a resilient lip (16) of the corresponding connecting opening (12).

21. Mounting system according to claim 1, **characterized in that** the intermediate part (4), on its side directed away from the support part (3), is coupled to a plate-like clamping part (5).

22. Mounting system according to claim 21, **characterized in that** the intermediate part (4), on the side directed away from the support part (3), is provided with two bent-over longitudinal edges (17) which are parallel to one another, are directed away from the support part (3) and engage around the corresponding longitudinal edges (18) of the clamping part (5).

## Patentansprüche

1. Befestigungssystem mit einem profilierten Abschnitt (2), der im wesentlichen einen C-förmigen Querschnitt und eine Montageöffnung (7) hat, die in Längsrichtung des profilierten Abschnittes (2) verläuft und durch zueinander parallele, nach innen gebogene, geflanschte Kanten (9) des profilierten Abschnittes (2) begrenzt ist, mit einem Befestigungselement (6), das in der Lage ist, mit dem profilierten Abschnitt (2) zusammen zu wirken, und das einen leicht länglichen plattenförmigen Trägerteil (3) aufweist, in welchem ein Bohrloch (29) ausgebildet ist, das mit einem Schraubgewinde zur Aufnahme eines Schraubbolzens, eines Schraubschaftes oder dergl. versehen ist, wobei dieser Abstützteil (3) zum Zweck der Kopplung des Befestigungselementes (6) mit dem profilierten Abschnitt (2) über die Montageöffnung (7) in das Innere des profilierten Abschnittes (2) eingeführt und dann in Drehung versetzt werden kann, derart, dass der Abstützteil (3) in der gedrehten Position die Breite der Montageöffnung (7) überspannt, und mit einem plattenförmigen Zwischenteil (4), das mit dem Abstützteil (3) verbunden ist und im wesentlichen parallel zu dem Abstützteil (3) verläuft, wobei der Abstand zwischen dem Zwischenteil (4) und dem Abstützteil (3) innerhalb definierter Grenzen variabel ist, das Zwischenteil (4) und das Abstützteil (3) im wesentlichen nicht relativ zueinander drehbar sind, das Zwischenteil (4) mit einer Durchgangsöffnung (31) versehen ist, die entgegengesetzt zu dem Bohrloch (29) in dem Abstützteil (3) für einen Schraubbolzen, Schraubschaft oder dergl. liegt und Dimensionen hat, die so ausgelegt sind, dass in dem Zustand, in dem das Befestigungselement (6) mit dem profilierten Abschnitt (2) gekoppelt ist, das Zwischenteil (4) in der Lage ist, die Montageöffnung (7) in dem profilierten Abschnitt (2) auf der Außenseite des profilierten Abschnittes (2) zu koppeln, und das Zwischenteil (4) auf der dem Abstützteil (3) zugewandten Seite mit einem Federelement versehen ist, das zwischen dem Zwischenteil (4) und dem Abstützteil (3) wirkt, **dadurch gekennzeichnet, dass** das Abstützteil (3) einerseits und das Zwischenteil (4) mit dem Federelement andererseits getrennte Bauteile sind und das Federelement gegen das Abstützteil (3) anliegt und eine Kraft darauf ausübt, die die Tendenz hat, das Abstützteil (3) und das Zwischenteil (4) auseinander zu drücken.

2. Befestigungssystem nach Anspruch 1, **dadurch gekennzeichnet, dass** das Federelement und das Zwischenteil (4) eine einzige Einheit ausbilden und dass das Federelement aus der Ebene des Zwischenteiles (4) gegen das Abstützteil (3) abgebogen ist.

3. Befestigungssystem nach Anspruch 2, **dadurch gekennzeichnet, dass** das Federelement mindestens eine elastisch nachgiebige Lippe (27) aufweist, die an ihrem freien Ende gegen das Abstützteil (3) anliegt.

4. Befestigungssystem nach Anspruch 3, **dadurch gekennzeichnet, dass** das Federelement eine Mehrzahl von, vorzugsweise zwei, elastisch nachgiebigen Lippen (27) aufweist, die unmittelbar benachbart dem Bereich der Durchgangsöffnung (7) positioniert sind.

5. Befestigungssystem nach einem der Ansprüche 1 - 4, **dadurch gekennzeichnet, dass** das Zwischenteil (4) auf der dem Abstützteil (3) zugewandten Seite mit einem Widerstandselement versehen ist, das in dem Zustand, in dem das Befestigungselement (6) mit dem profilierten Abschnitt (2) gekoppelt ist, mit mindestens einer nach innen gebogenen Flanschkante (9) des profilierten Abschnittes (2) zusammenwirkt, um es für das Befestigungselement (6) schwierig zu machen, eine Verschiebung gegenüber dem profilierten Abschnitt (2) auszuführen.

6. Befestigungssystem nach Anspruch 5, **dadurch gekennzeichnet, dass** das Widerstandselement und das Zwischenteil (4) eine einzige Einheit bilden, und dass das Widerstandselement aus der Ebene des Zwischenteils (4) gegen das Abstützteil (3) abgebogen ist.

7. Befestigungssystem nach Anspruch 5 oder 6, **dadurch gekennzeichnet, dass** das Widerstandselement mindestens eine elastisch nachgiebige Lippe (28) aufweist, die in dem Zustand, in dem die Befestigungsvorrichtung (6) mit dem profilierten Abschnitt (2) gekoppelt ist, an ihrem freien Ende gegen die Außenseite mindestens einer der nach innen gebogenen geflanschten Kanten (9) des profilierten Abschnittes (2) gekoppelt ist und eine Kraft darauf ausübt, die dahin tendiert, die geflanschte Kante (9) und das Zwischenteil (4) auseinander zu drücken.

8. Befestigungssystem nach einem der Ansprüche 5 - 7, **dadurch gekennzeichnet, dass** das Widerstandselement eine Mehrzahl von, vorzugsweise zwei, elastisch nachgiebigen Lippen (28) aufweist, die jeweils in der Lage sind, mit einer nach innen gebogenen geflanschten Kante (9) des profilierten Abschnittes (2) zusammen zu wirken.

9. Befestigungssystem nach Anspruch 1, **dadurch gekennzeichnet, dass** das Zwischenteil (4) mit einem Anschlag versehen ist, der in dem Zustand, in dem das Befestigungselement (6) mit dem profilierten Abschnitt (2) gekoppelt ist, die Möglichkeit verhindert, dass das Zwischenteil (4) und damit das Abstützteil (3) zurückgedreht wird.

10. Befestigungssystem nach Anspruch 9, **dadurch gekennzeichnet, dass** der Anschlag eine einzelne Einheit mit dem Zwischenteil (4) bildet und aus der Ebene des Zwischenteiles (4) gegen das Abstützteil (3) gebogen ist.

11. Befestigungssystem nach Anspruch 10, **dadurch gekennzeichnet, dass** der Anschlag als elastisch nachgiebige Lippe (25) ausgebildet ist.

12. Befestigungssystem nach Anspruch 11, **dadurch gekennzeichnet, dass** die elastisch nachgiebige Lippe (25) an ihrem freien Ende mit einem Lippenendteil (26) versehen ist, das weg von dem Abstützteil (13) gerichtet ist und in dem Zustand, in dem das Befestigungselement (6) mit dem profilierten Abschnitt (2) gekoppelt ist, gegen die Seite der nach innen gebogenen geflanschten Kante (9) anliegt, die gegen die Montageöffnung (7) gerichtet ist.

13. Befestigungssystem nach einem der Ansprüche 9 - 12, **dadurch gekennzeichnet, dass** das Zwischenteil (4) eine Mehrzahl von vorzugsweise zwei Anschlägen aufweist.

14. Befestigungsvorrichtung nach Anspruch 1, **dadurch gekennzeichnet, dass** das Abstützteil (3) mit einer Mehrzahl von, vorzugsweise zwei, Verbindungsstiften (11) versehen ist, die das Abstützteil (3) und das Zwischenteil (4) miteinander verbinden, wobei es möglich ist, den Abstand zwischen dem Abstützteil (3) und dem Zwischenteil (4) innerhalb festgelegter Grenzen zu variieren, wobei das Abstützteil (3) und das Zwischenteil (4) weitgehend daran gehindert werden, eine Drehung relativ zueinander auszuführen.

15. Befestigungssystem nach Anspruch 14, **dadurch gekennzeichnet, dass** die Verbindungsstifte (11) und das Abstützteil (3) eine einzige Einheit bilden, und die Verbindungsstifte (11) jeweils gegen das Zwischenteil (4) gerichtet sind.

16. Befestigungssystem nach Anspruch 14 oder 15, **dadurch gekennzeichnet, dass** die Verbindungsstifte (11) an ihren freien Enden mit einem hakenförmigen Ende (14) versehen sind, das hinter dem Zwischenteil (4) eingreift.

17. Befestigungssystem nach einem der Ansprüche 14 - 16, **dadurch gekennzeichnet, dass** das Zwischenteil (4) mit einer Mehrzahl von, vorzugsweise zwei, Verbindungsöffnungen (12) versehen ist.

18. Befestigungssystem nach Anspruch 17, **dadurch gekennzeichnet, dass** die Verbindungsöffnungen (12) jeweils eine elastisch nachgiebige Lippe (16) aufweisen, die in der Lage ist, mit dem hakenförmigen Ende (14) eines Verbindungsstiftes (11) des Abstützteiles (3) zusammen zu wirken.

19. Befestigungssystem nach Anspruch 18, **dadurch gekennzeichnet, dass** die nachgiebigen Lippen (16) eine einzige Einheit mit dem Zwischenteil (4) ausbilden.

20. Befestigungssystem nach Anspruch 19, **dadurch gekennzeichnet, dass** das Abstützteil (3) und das Zwischenteil (4) miteinander verbunden sind, wobei das hakenförmige Ende (14) eines jeden Verbindungsstiftes (11) hinter einer elastisch nachgiebigen Lippe (16) der entsprechenden Verbindungsöffnung (12) in Eingriff kommt.

21. Befestigungssystem nach Anspruch 1, **dadurch gekennzeichnet, dass** das Zwischenteil (4) auf seiner von dem Abstützteil (3) weg gerichteten Seite mit einem plattenförmigen Klemmteil (5) gekoppelt ist.

22. Befestigungssystem nach Anspruch 21, **dadurch gekennzeichnet, dass** das Zwischenteil (4) auf der von dem Abstützteil (3) weg gerichteten Seite mit zwei umgebogenen länglichen Kanten (17) versehen ist, die parallel zueinander verlaufen, von dem Abstützteil (3) weg gerichtet sind und um die entsprechenden Längskanten (18) des Klemmteils (5) in Eingriff miteinander kommen.

## Revendications

1. Système de montage comprenant une section profilée (2) qui est sensiblement en forme de C en coupe transversale et qui possède une ouverture d'assemblage (7), qui s'étend dans la direction longitudinale de la section profilée (2) et qui est délimitée par des arêtes bridées pliées vers l'intérieur parallèles entre elles (9) de la section profilée (2), et un élément de montage (6) qui est capable d'interagir avec la section profilée (2) et qui comprend une partie de support légèrement allongée semblable à une plaque (3), dans laquelle se trouve un trou percé (29) qui est muni d'un filetage à vis pour recevoir un boulon fileté, une tige filetée ou similaire, laquelle partie de support (3), dans le but de coupler l'élément de montage (6) à la section profilée (2), peut être introduite via l'ouverture d'assemblage (7) dans l'intérieur de la section profilée (2) et peut être ensuite mise en rotation, d'une manière telle que la partie de support (3), dans la position tournée, couvre la largeur de l'ouverture d'assemblage (7), et une partie intermédiaire semblable à une plaque (4) qui est connectée à la partie de support (3) et qui s'étend de manière sensiblement parallèle à la partie de support (3), la distance entre la partie intermédiaire (4) et la partie de support (3) étant variable à l'intérieur de limites définies, et la partie intermédiaire (4) et la partie de support (3) étant sensiblement incapables de tourner l'une par rapport à l'autre, laquelle partie intermédiaire (4) est munie d'une ouverture de passage (31), reposant face au trou percé (29) dans la partie de support (3), pour un boulon fileté, une tige filetée ou similaire, et présente des dimensions qui sont telles que, dans l'état dans lequel l'élément de montage (6) est couplé à la section profilée (2), la partie intermédiaire (4) est capable de couvrir l'ouverture d'assemblage (7) dans la section profilée (2) sur l'extérieur de la section profilée (2), la partie intermédiaire (4) étant munie, sur le côté dirigé vers la partie de support (3), d'un élément formant ressort qui agit entre la partie intermédiaire (4) et la partie de support (3), **caractérisé en ce que** la partie de support (3), d'une part, et la partie intermédiaire (4) avec l'élément formant ressort, d'autre part, sont des composants distincts et **en ce que** l'élément formant ressort appuie contre la partie de support (3) et exerce une force sur celle-ci qui a tendance à repousser la partie de support (3) et la partie intermédiaire (4).

2. Système de montage selon la revendication 1, **caractérisé en ce que** l'élément formant ressort et la partie intermédiaire (4) forment une unité unique et **en ce que** l'élément formant ressort est plié à l'écart du plan de la partie intermédiaire (4) vers la partie de support (3).

3. Système de montage selon la revendication 2, **caractérisé en ce que** l'élément formant ressort comprend au moins une lèvre élastique (27) qui, au niveau de son extrémité libre, appuie contre la partie de support (3).

4. Système de montage selon la revendication 3, **caractérisé en ce que** l'élément formant ressort comprend une pluralité de, de préférence deux, lèvres élastiques (27), qui sont positionnées à proximité de la zone de l'ouverture de passage (7).

5. Système de montage selon l'une des revendications 1 à 4, **caractérisé en ce que** la partie intermédiaire (4) est munie, sur le côté dirigé vers la partie de support (3), d'un élément de résistance qui, dans l'état dans lequel l'élément de montage (6) est couplé à la section profilée (2), interagit avec au moins une arête bridée pliée vers l'intérieur (9) de la section profilée (2) afin de rendre difficile le décalage de l'élément de montage (6) par rapport à la section profilée (2).

6. Système de montage selon la revendication 5, **caractérisé en ce que** l'élément de résistance et la partie intermédiaire (4) forment une unité unique et **en ce que** l'élément de résistance est plié à l'écart du plan de la partie intermédiaire (4) vers la partie de support (3).

7. Moyens de montage selon la revendication 5 ou la revendication 6, **caractérisé en ce que** l'élément de résistance comprend au moins une lèvre élastique (28) qui, dans l'état dans lequel les moyens de montage (6) sont couplés à la section profilée (2), appuie au niveau de son extrémité libre contre l'extérieur d'au moins l'une des arêtes bridées pliées vers l'intérieur (9) de la section profilée (2) et exerce une force dessus qui a tendance à repousser l'arête bridée (9) et la partie intermédiaire (4).

8. Système de montage selon l'une des revendications 5 à 7, **caractérisé en ce que** l'élément de résistance comprend une pluralité de, de préférence deux, lèvres élastiques (28) qui sont chacune capables d'interagir avec une arête bridée pliée vers l'intérieur (9) de la section profilée (2).

9. Système de montage selon la revendication 1, **caractérisé en ce que** la partie intermédiaire (4) est munie d'une butée qui, dans l'état dans lequel l'élément de montage (6) est couplé à la section profilée (2), empêche que la partie intermédiaire (4) et donc la partie de support (3) ne soient éventuellement mises en rotation en sens inverse.

10. Système de montage selon la revendication 9, **caractérisé en ce que** la butée forme une unité unique avec la partie intermédiaire (4) et est pliée à l'écart du plan de la partie intermédiaire (4) vers la partie de support (3).

11. Système de montage selon la revendication 10, **caractérisé en ce que** la butée est conçue en tant que lèvre élastique (25).

12. Système de montage selon la revendication 11, **caractérisé en ce que** la lèvre élastique (25) est munie au niveau de son extrémité libre d'une partie d'extrémité de lèvre (26) qui est dirigée à l'écart de la partie de support (3) et qui, dans l'état dans lequel l'élément de montage (6) est couplé à la section profilée (2), appuie contre ce côté de l'arête bridée pliée vers l'intérieur (9) qui est dirigé vers l'ouverture d'assemblage (7).

13. Système de montage selon l'une des revendications 9 à 12, **caractérisé en ce que** la partie intermédiaire (4) comprend une pluralité de butées, de préférence deux.

14. Moyens de montage selon la revendication 1, **caractérisés en ce que** la partie de support (3) est munie d'une pluralité de, de préférence deux, broches de connexion (11) qui connectent la partie de support (3) et la partie intermédiaire (4) l'une à l'autre, la distance entre la partie de support (3) et la partie intermédiaire (4) pouvant varier à l'intérieur de limites définies, mais la partie de support (3) et la partie intermédiaire (4) étant sensiblement incapables de tourner l'une par rapport à l'autre.

15. Système de montage selon la revendication 14, **caractérisé en ce que** les broches de connexion (11) et la partie de support (3) forment une unité unique et **en ce que** les broches de connexion (11) sont chacune dirigées vers la partie intermédiaire (4).

16. Système de montage selon la revendication 14 ou la revendication 15, **caractérisé en ce que** les broches de connexion (11) sont munies, au niveau de leur extrémité libre, d'une extrémité en forme de crochet (14) qui vient en prise derrière la partie intermédiaire (4).

17. Système de montage selon l'une des revendications 14 à 16, **caractérisé en ce que** la partie intermédiaire (4) est munie d'une pluralité d'ouvertures de connexion (12), de préférence deux.

18. Système de montage selon la revendication 17, **caractérisé en ce que** les ouvertures de connexion (12) comprennent chacune une lèvre élastique (16) qui est capable d'interagir avec l'extrémité en forme de crochet (14) d'une broche de connexion (11) de la partie de support (3).

19. Système de montage selon la revendication 18, **caractérisé en ce que** les lèvres élastiques (16) forment une unité unique avec la partie intermédiaire (4).

20. Système de montage selon la revendication 19, **caractérisé en ce que**, dans l'état dans lequel la partie de support (3) et la partie intermédiaire (4) sont connectées l'une à l'autre, l'extrémité en forme de crochet (14) de chaque broche de connexion (11) vient en prise derrière une lèvre élastique (16) de l'ouverture de connexion correspondante (12).

21. Système de montage selon la revendication 1, **caractérisé en ce que** la partie intermédiaire (4), sur son côté dirigé à l'écart de la partie de support (3), est couplée à une partie de serrage en forme de plaque (5).

22. Système de montage selon la revendication 21, **caractérisé en ce que** la partie intermédiaire (4), sur le côté dirigé à l'écart de la partie de support (3), est munie de deux arêtes longitudinales repliées (17) qui sont parallèles entre elles, qui sont dirigées à l'écart de la partie de support (3) et qui viennent en prise autour des arêtes longitudinales correspondantes (18) de la partie de serrage (5).
